# EUROPEAN PATENT SPECIFICATION

(11) **EP 2 387 264 B1**
(45) Date of publication and mention of the grant of the patent: **26.01.2022**
(21) Application number: 11165340.8
(22) Date of filing: 09.05.2011
(51) Int. Cl.: H04W 16/26, H04W 24/02, H04W 12/00, H04W 88/08

(54) **Wireless Range Extender**
Drahtloser Reichweitenerweiterer
Dispositif d'extension de plage sans fil

(30) Priority: 10.05.2010 US 777008
(43) Date of publication of application: 16.11.2011
(73) Proprietor: Comcast Cable Communications, LLC, Philadelphia, PA 19103 (US)
(72) Inventor: Connelly, Michael, Philadelphia, PA 19103 (US); Pedaprolu, Hari Venkatram, Philadelphia, PA 19103 (US)
(74) Representative: Jaeger, Michael David

(56) References cited:
- EP-A2- 1 355 448
- WO-A1-2007/077619
- WO-A2-2007/136732
- US-A1- 2002 199 104
- US-A1- 2006 039 360
- US-A1- 2008 175 212

## Description

### FIELD OF ART

The features described herein generally relate to communication of wireless devices in a networked home or office environment. For example, some features relate to extending a wireless network to connect distant wireless devices that may be located in a WiFi dead zone.

### BACKGROUND

The range of a wireless network depends on various factors including the WiFi technology it supports. Current wireless technologies have limited range and may not cover all parts of the home or a business location. Sometimes, the actual achieved range is far less than the supported protocol range, because of multiple obstacles between the WiFi Access point (WAP) and the wireless client.

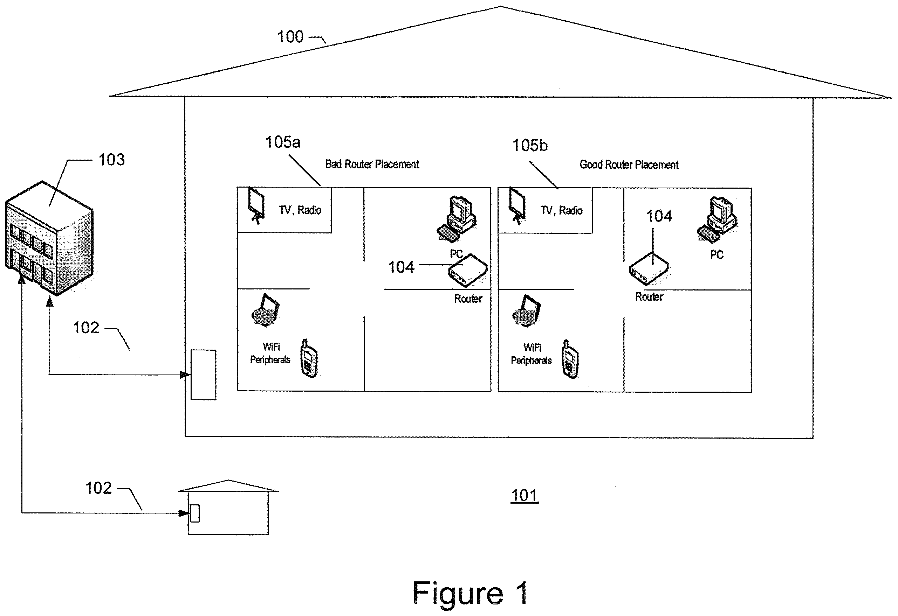

For instance, Figure 1 illustrates a home 100 that may be connected to an information distribution network 101. Information Distribution network 101 may be any type or combination of information distribution networks, such as fiber optic, cable, hybrid, satellite, telephone, cellular, and/or wireless. The background example illustrated in Figure 1 is a hybrid fiber/coax distribution network found in many television networks. Such networks 101 may use a series of interconnected coaxial lines and fiber optic cables 102 to connect multiple homes to a cable television central office 103. The central office 103 may transmit downstream information signals onto the lines 102, and each home 100 may have a cable modem used to receive and process those signals.

As shown in Figure 1, wireless access point 104 may be positioned in different locations in home 100. Figure 1 illustrates two different locations for wireless access point 104. With respect to area 105a of Figure 1, WiFi clients located in other rooms of home 100 can not connect to the wireless network because the wireless access point 104 is too distant from those particular WiFi clients. With respect to area 105b of Figure 1, wireless access point 104 is centrally located to provide better signal coverage in all rooms of home 100. However, placing wireless access point 104 in such a location may not be practical or may still not fully cover the complete footprint of home 100.

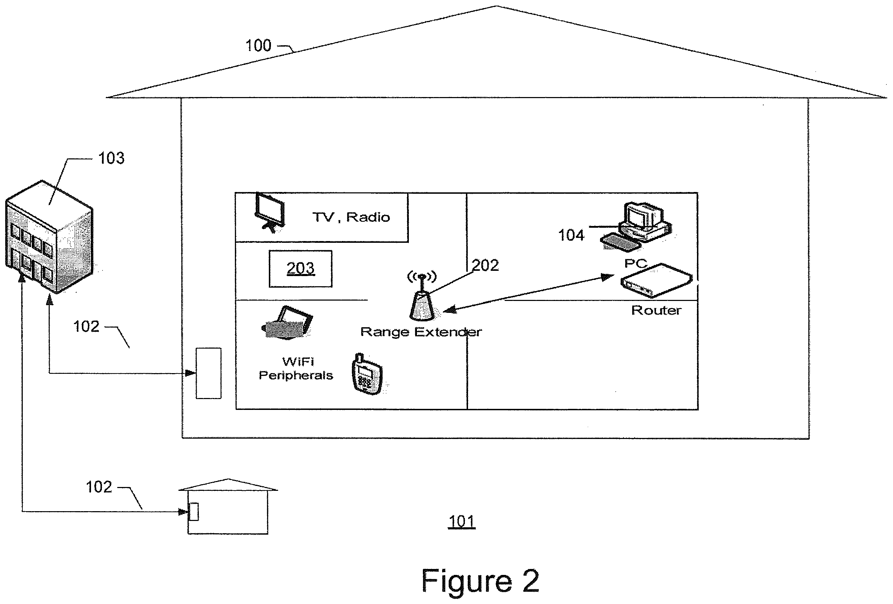

Conventionally, wireless range extenders are used to extend the range of a wireless network. A wireless range extender increases the distance over which a wireless LAN (WLAN) signal may spread by overcoming structural obstacles and increasing signal strength and quality. For instance, Figure 2 illustrates range extender 202. Range extender 202 may connect to a base WAP 203 over a wireless connection. Wireless clients may move freely across the two wireless networks of the base WAP 203 and the range extender 202. However, a range extender 202 has to be within the range of the base WAP 203 and can not be within a WiFi dead zone of the base WAP 203. Also, current wireless range extenders use directional antennas for extending range or define a system to manage concurrent network access. These systems, however, can not be used to provide network connectivity over a larger range. Also, network performance of devices connected through conventional wireless range extenders generally will be lower than if they were connected directly to the primary base access point.

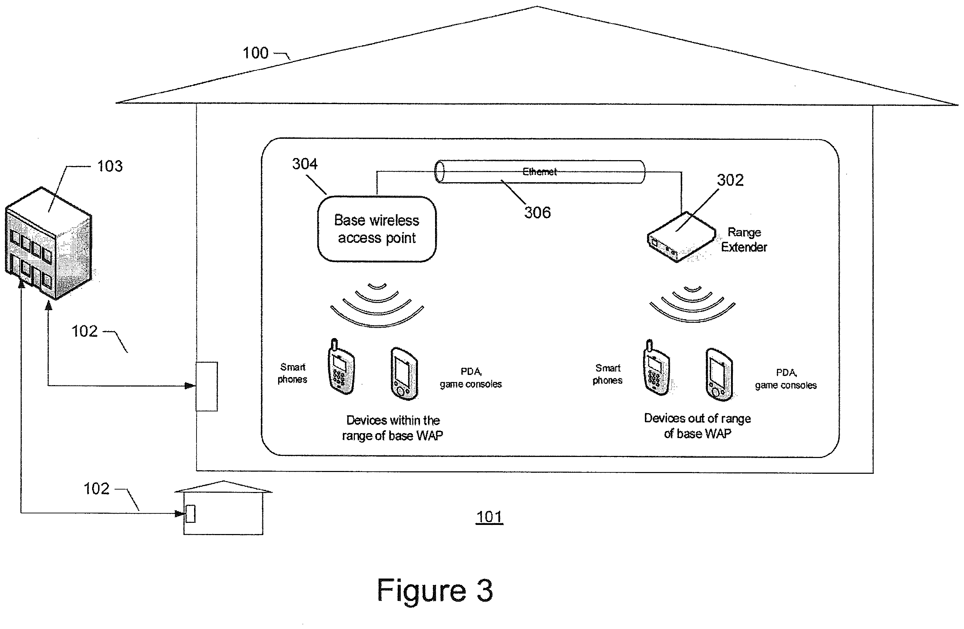

In another conventional implementation, an Ethernet or wireless connection may be used to connect a range extender to the WAP. However, each of these implementations has additional disadvantages. Figure 3 illustrates a range extender 302 connected to a base WAP 304 using an Ethernet backhaul connection 306. The Ethernet backhaul connection 306 may require use of a long Ethernet cable or a LAN network within the home to connect the range extender 302 to the base WAP 304. Moreover, the network may require additional hardware such as LAN switches for implementation. In addition, with generally available Fast Ethernet ports, a maximum data rate of 100 Mbps can be achieved and could become a limiting factor to support media rendering applications. Gigabit ports could be used for connecting the range extender to the base WAP, however these are costlier.

Using a wireless connection to connect the range extender to the WAP also has significant drawbacks. In such a configuration, the range extender is generally connected to the base WAP over a wireless connection using WDS (Wireless Distribution System).

In such implementations, the range extender has to be within the range of the base WAP for it to communicate with base WAP and to relay the signals to, for example, the backhaul broadband connection. Also, with WDS, wireless throughput is halved after the first retransmission is made. Finally, dynamically assigned and rotated encryption keys are usually not supported with WDS.

Thus, there remains a need for a cost effective and seamless way to extend a wireless network to connect distant wireless devices that may be located in a WiFi dead zone.

US2006/0039360 describes a method and system for distribution of configuration information among access points (AP) in a WLAN across a distribution system (DS). An AP, performing in a role of an AP-configurator may configure another AP, performing in a role of AP-client. The AP-configurator may distribute configurator configuration information to the AP-client. A configured AP-client may adopt a role of AP-configurator to configure a subsequent AP-client. An AP-configurator, or configured AP-client may subsequently configure a client station. The AP-configurator or configured AP-client may distribute configuration information to the client station. The configuration information may be based on previously distributed configurator configuration information. The method may enable client stations to be configured based on common configuration information that may be derived from configurator configuration information that was distributed by an AP-configurator. The client stations configured based on the common configuration information may communicate information in a secure network.

WO2007/136732 describes a wireless repeater extending a coverage area of a wireless network base station within a structure or facility. The repeater includes a master unit for wirelessly communicating with the wireless network base station and a slave unit for wirelessly communicating with one or more subscriber terminals. The master unit is connected to the slave unit through new or existing wiring in the structure to enable the master unit to transmit wireless signals to the slave unit on a downlink transport frequency and to receive wireless signals from the slave unit on an uplink transport frequency in a manner that is transparent to the wireless base station and the subscriber terminals.

### SUMMARY

The invention is defined by the subject-matter of the independent claims

Preferred embodiments are set out in the dependent claims.The following aspects are provided for illustrative purposes

In an aspect, Multimedia over Coax Alliance (MoCA) is used to connect a range extender to a base Wireless Access Point (WAP). The MoCA based range extender may be outside the wireless range of the base WAP. In an embodiment, the MoCA based range extender may be in a WiFi dead zone of the WAP. The MoCA range extender may support at least the same wireless bands as that of the base WAP.

In another aspect, the base WAP may configure the MoCA range extender. The WAP may act as a MoCA network controller and seamlessly connect the MoCA range extender and other wireless clients to the network.

In yet another aspect, the MoCA range extender may be automatically discovered when connected to the coax network and powered on. Upon being powered on, the MoCA range extender may be initialized. The initialization process may include the downloading of configuration and wireless network parameters to the MoCA range extender, such as wireless SSID, channel number, and encryption keys. Administration of the MoCA range extender may be accomplished through the administration interface of the base WAP.

In an aspect, configuration management, firmware upgrades, and maintenance may be executed and performed via a service provider's network. In an aspect of the disclosure, the MoCA range extender may be part of the services provider's authorized service domain and the required attributes for provisioning, controlling, and maintaining may be maintained in the MoCA device database.

Other details and features will also be described in the sections that follow.

### BRIEF DESCRIPTION OF THE DRAWINGS

Some features herein are illustrated by way of example, and not by way of limitation, in the figures of the accompanying drawings and in which like reference numerals refer to similar elements.
Figure 1 illustrates an exemplary wireless access point located in different parts of a user's home.
Figure 2 illustrates an exemplary wireless range extender located in a user's home to expand access to a wireless network.
Figure 3 illustrates a range extender connected to a base WAP using an Ethernet backhaul connection.
Figure 4 illustrates a MoCA range extender connected to a base WAP using a coaxial cable.
Figure 5 illustrates an internal block diagram of various components of a MoCA range extender and base WAP.
Figure 6 illustrates an internal block diagram of additional exemplary components that may be contained in the MoCA range extender.
Figure 7 illustrates an exemplary method of extending a wireless network.

### DETAILED DESCRIPTION

In an aspect, a coaxial cable may be used to connect a MoCA range extender to a base WAP. In an embodiment, communication traffic may be switched between the WiFi network and the home network which may be for example a coaxial cable home network at the MoCA range extender and base WAP.

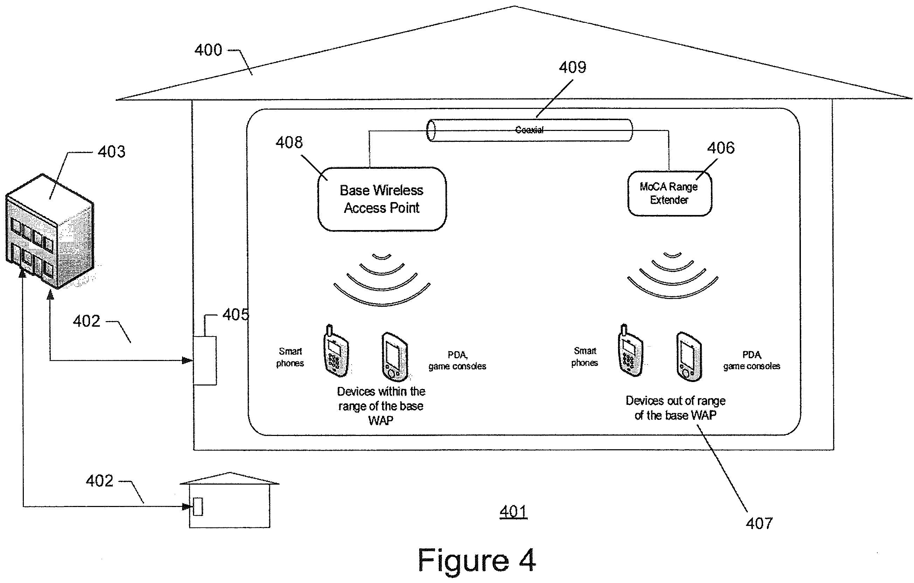

Referring to Figure 4, home 400 may be connected to an information distribution network 401. Network 401 may be any combination of information distribution networks, such as optical fiber, cable, satellite, telephone, cellular, and wireless. Although the disclosure is applicable to various types of networks, for illustration purposes, a hybrid fiber/coax-type distribution network found in many television networks. Such networks 401 may use, for examples, a series of lines, such as interconnected coaxial lines 402 to connect multiple homes to a television provider's central office 403. The central office 403 may transmit downstream information signals onto the lines 402, and each home 400 may have a modem 405, such as a cable modem, used to receive and process those signals. The connections between modem 405 and base WAP 408 are not shown in the Figures (for clarity purposes), but the connections may take the form of a multitude of different interfaces and connectors.

Central office 403 may include a termination system (TS), such as a cable modem termination system (CMTS), which may be a computing device configured to manage communications between devices on the network of lines 402 and backend devices such as content sources (e.g., video on demand servers, television program sources, etc.), central office computers and other networks. The TS may be as specified in the Data Over Cable Service Interface Specification (DOCSIS) standard, published by Cable Television Laboratories, Inc. (a.k.a. CableLabs), or it may be a similar or modified device instead. The TS may be configured to place data on one or more downstream frequencies to be received by modems, such as cable modems, at the various homes such as home 400, and to receive upstream communications from those modems on one or more upstream frequencies, as well as to serve as an interface to devices and networks that are further upstream, such as other Internet devices.

As shown in Figure 4, a MoCA based wireless extender 406 may be used to extend a wireless network to wireless clients 407 that are out of range of base WAP 408. The MoCA wireless extender 406 may be connected to WAP 408 using coaxial cable 409, for example. Use of the MoCA wireless extender 406 enables distribution of high-quality multimedia content and high-speed data with throughput exceeding 100 Mbps.

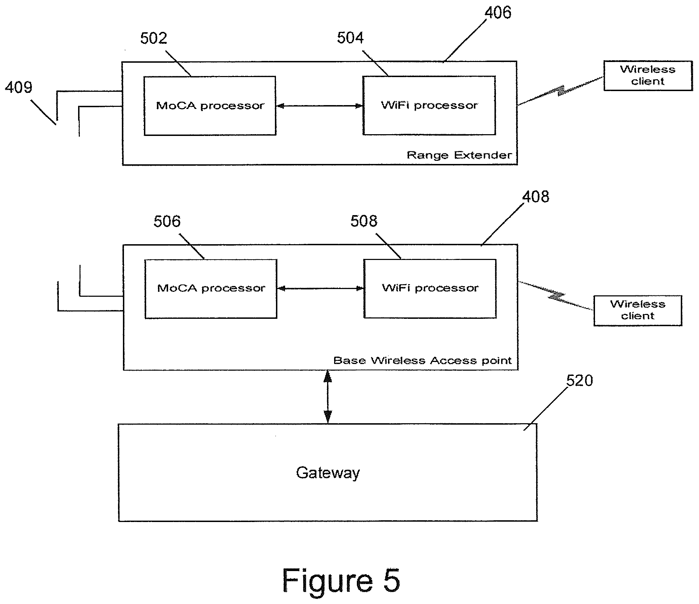

Figure 5 illustrates an internal block diagram of MoCA range extender 406 and the base WAP 408 In an embodiment, range extender 406 may include a MoCA processor 502 and a WiFi processor 504. Similarly, base WAP 408 may include a MoCA processor 506 and a WiFi processor 508. The processors may switch each device between conventional wireless bands and also switch each device from MoCA to WiFi and vice versa. WAP 408 may be connected to gateway 520.

In an aspect, base WAP 408 may be configured as a preferred MoCA Network Controller (NC) and push all configuration data to the MoCA range extender 406. In an embodiment, base WAP 408 may detect MoCA range extender 406 during power up or connection to the network. In another embodiment, MoCA range extender 406 may be manually paired to base WAP 408. In an embodiment, the manually pairing may be accomplished through depressing a pairing button located on the MoCA range extender 406. In an alternative embodiment, the manually pairing may be accomplished via software located on a web administration page. In an embodiment, pairing may be similar to Wi-Fi client pairing using WPS or DHCP messaging. In another embodiment, a pairing option on the web interface of the WAP may be provided, so that the range extenders on the network may be detected. In an embodiment, there may be a defined protocol mechanism between the WAP 408 and the MoCA range extender 406. These two devices may exchange messages. The MoCA range extender 406 may publish a message that it is powered on and broadcast its capabilities on the MoCA network. The WAP 408 may detect the addition of a new device and send a message that the WAP 408 is the Network Controller. Then MoCA range extender 406 may listen to the WAP 408. The WAP 408 may push the required configuration and parameters to the MoCA range extender 406. In an embodiment, if the MoCA range extender 406 firmware is to be updated, the WAP 408 may detect the status and request the updated firmware from MSO network and push to the MoCA range extender 406. Once the firmware is updated, configuration is completed, then the MoCA range extender 406 is under control of the WAP 408 and can be managed by the WAP 408 (through the web admin pages or other mechanisms).

In another aspect, after discovering MoCA range extender 406, base WAP 408 may automatically transmit wireless network configuration information to the MoCA range extender 406. The configuration data may include wireless network parameters, security parameters, configuration and control information about connected devices, and performance characteristics. The wireless network parameters may include but are not limited to SSID, channel number, wireless protocol (802.11 a/b/g/n), and frequency bands of operation. In one embodiment, the security parameters may include encryption protocols (WEP, WPA, WPA2, etc...). In addition, the MoCA extender 406 may transmit configuration requests that include DHCP and ICMP requests.

In an aspect, MoCA range extender 406 may provide a web interface that may be accessed and managed from a web administration page of the base WAP 408. In an embodiment, MoCA range extender 406 may be managed from a service provider's network. The service provider's network may communicate with MoCA range extender 406 and update firmware and configuration information. In an embodiment, management protocols such as SNMP, HNAP and TR069 may be used to control the MoCA range extender 406 from the service provider's network. In an embodiment, MoCA range extender 406 may be part of the provider's authorized service domain and the required attributes for provisioning, controlling and maintaining would be maintained in the device data base. In another aspect of the disclosure, the Authorized Service Domain (ASD) may assist in connecting devices to the service provider's network so that they can be controlled and managed. The devices in the ASD may be able to communicate without any content protection issues and share the information, configuration and parameters. For example, if the MoCA range extender 406 firmware is to be upgraded, then the MoCA range extender 406 has to be connected to the MSO network and can be in the ASD so that the FW integrity is verified and to be in fail-safe operation. In another embodiment, if some devices are connected to the MoCA range extender 406 and are sharing the protected content with other MoCA devices (such as an mDVR STB), then all of these devices are in the ASD.

In another aspect, any number of MoCA based range extenders could be connected to the base WAP as the home's coaxial network is not subject to the range and interference limitations of a wireless link. In an embodiment, each MoCA range extender may provide multiple physical interfaces in addition to wireless interfaces such as USB, Ethernet, and HDMI, audio and video interfaces and other open interfaces for communication such as DLNA, and bonjour. In an embodiment, the MoCA range extender may extend to other interfaces. The MoCA range extender may connect to other physical interfaces and support device discovery, media sharing, file sharing protocols. In an embodiment, the clients connected to the MoCA range extender may share the media to other clients connected to the WAP and vice-versa.

A wireless client connecting to a base WAP may be able to send media content to a client connected to a physical port of the MoCA range extender. For example, a user might have a laptop connected to the wireless network, and may wish to send media to a printer in another room. The laptop could transmit the media to base WAP by a wireless connection. The base WAP may transmit it to the MoCA base range extender and the MoCA based range extender may transmit it to the printer via the physical port (e.g., USB).

The MoCA range extender may also support multiple device discovery and media sharing protocols such as UPnP, DLNA, or DAAP to stream media content from any device in the home to the devices connected to the MoCA range extender. Also, a media manger may transmit media content to the range extender using DLNA with UPnP or DAAP.

In another aspect, security measures may be implemented to prevent unauthorized and unauthenticated users access to the network through the MoCA range extender. In an embodiment, the security measures may include a confirmation option for not broadcasting the SSID and other network parameters from the MoCA range extender. In another embodiment, the MoCA range extender may be managed and controlled from the base WAP. In an embodiment, as the MoCA range extender is paired to the WAP, the WAP may have all the configuration parameters of the MoCA range extender. The MoCA range extender may be managed by the web administration interface. The MoCA range extender may be controlled by management protocols such as SNMP or TR-069. In another embodiment, the MoCA range extender may be managed by HNAP. As another security measure, encryption keys may be assigned and updated dynamically for the wireless network. In an additional embodiment, to prevent network hacking and virus attacks both trusted and untrusted device information may be forwarded from the MoCA range extender to the base WAP.

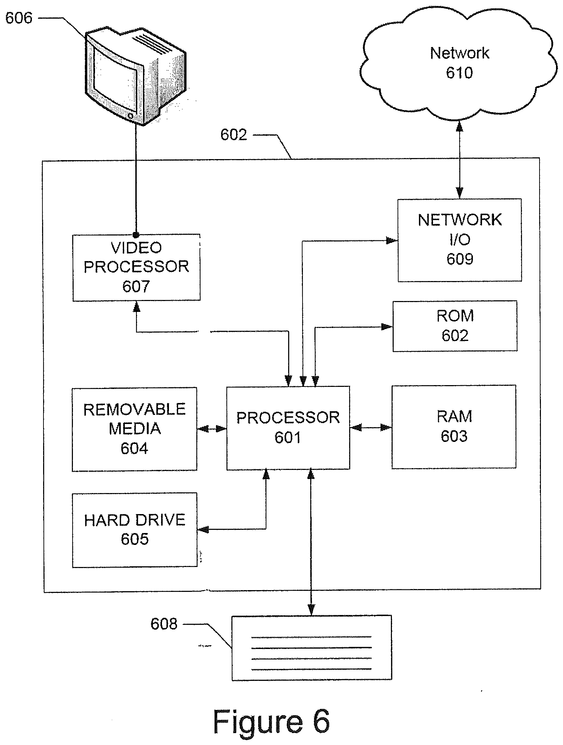

Figure 6 illustrates the general hardware elements of an exemplary MoCA range extender 602. . The MoCA range extender 602 may include one or more processors 601 (in addition to other processors such as MoCA processor 506 and WiFi processor 508), which may execute instructions of a computer program to perform any of the features described herein. Those instructions may be stored in any type of computer-readable medium or memory, to configure the operation of the processor 601. For example, instructions may be stored in a read-only memory (ROM) 602, random access memory (RAM) 603, removable media 604, such as a Universal Serial Bus (USB) drive, compact disk (CD) or digital versatile disk (DVD), floppy disk drive, or any other desired electronic storage medium. Instructions may also be stored in an attached (or internal) hard drive 605. The MoCA range extender 602 may include one or more output devices, such as a display 606 (or an external television connected to a set-top box), and may include one or more output device controllers 607, such as a video processor. There may also be one or more user input devices 608, such as a remote control, keyboard, mouse, touch screen, microphone, etc. The MoCA range extender 602 may also include one or more network input/output circuits 609, such as a network card to communicate with an external network 610. The network interface may be a wired interface, wireless interface, or a combination of the two. In some embodiments, the interface 609 may include a cable modem, and network 610 may include a cable television system's coaxial, fiber, or hybrid fiber/coaxial distribution system (e.g., a DOCSIS network).

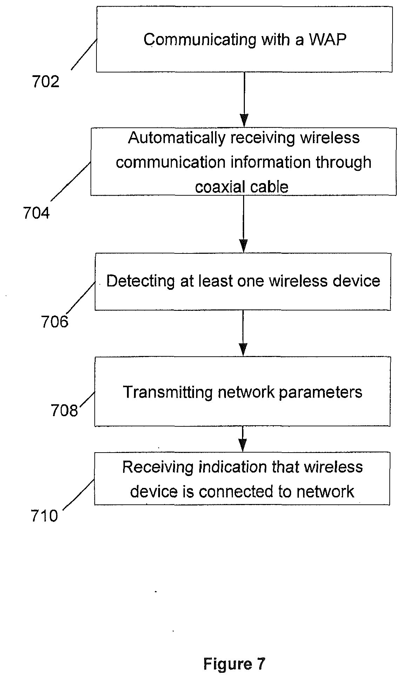

Figure 7 illustrates an exemplary method of extending a wireless network. Referring to Figure 7, at step 702 a MoCA range extender may be plugged into a home's coaxial wiring network, powered on, and initialized according to the MoCA standard (or any other protocol used to manage the communication medium between the extender and its base WAP). The range extender may communicate with a WAP after this initialization process (or as part of it, if the WAP is helping to manage the coaxial network communication as well). Next, at step 704 the MoCA range extender may automatically receive wireless configuration information from the WAP through the coaxial cable network or another home network. With that configuration information, the extender can then begin to operate as a clone of the base WAP, performing wireless network management functions in the same manner as the base WAP. Alternatively, the extender can be a "slave" wireless point, and simply transmit a signal as instructed by the base WAP, and forward received signals to the base WAP, via the coaxial connection to the WAP.

In step 706, at least one wireless device may be detected with the range of the MoCA wireless extender. The detected wireless device may be out of range of the WiFi signal from WAP.

In step 708, network parameters from the MoCA range extender may be transmitted to the at least one wireless device. Next, in step 710 the MoCA range extender may receive an indication that the detected at least one wireless device is connected to the wireless network.

In another aspect, a range extender may include at least one memory and at least one processor configured to access the at least one memory of the range extender. The memory may include instructions configured to automatically receive wireless configuration information through a coaxial cable, wherein the wireless configuration information includes at least an SSID and channel number information.

The memory may further include instructions to detect at least one wireless media device connected to a wireless network. Furthermore, the range extender may also include instructions to transmit network parameters to the at least one wireless media device. Finally, the range extender may also include instructions to receive an indication that the detected at least one wireless media device is connected to the wireless network.

In another aspect, , a second device such as a wireless access point may be configured to automatically detect the range extender. The second device may verify that the range extender is authorized to expand a range of a wireless network. In an embodiment, the second device may transmit wireless configuration information through a coaxial cable to the first device to configure the first device to expand the range of the wireless network.

In another aspect, a third device may be configured to automatically receive wireless configuration information through a coaxial cable, wherein the wireless configuration information includes at least SSID and channel number information. In addition, the third device may be configured to detect at least one wireless communications device to be connected to the wireless network. In an embodiment, the third device may transmit network parameters to the detected at least one wireless communications device. The first device may also receive an indication that the detected at least one wireless device is connected to the wireless network.

## Claims

1. A method of extending a wireless network through a range extender, the method being performed by the range extender and comprising:
receiving (704), via a wired communication path from a network controller comprised in a wireless access point, wireless configuration information associated with the wireless access point in response to connecting (702) the range extender via the wired communication path to the network controller;
configuring, based on the wireless configuration information associated with the wireless access point, at least one wireless property associated with the range extender;
detecting (706), based on the configured at least one wireless property, at least one wireless device to be connected via a wireless communication path to the wireless network;
transmitting (708) network parameters to the detected at least one wireless device; and
receiving (710) an indication that the detected at least one wireless device is connected via the wireless communication path to the wireless network.

2. The method of claim 1, further comprising automatically receiving updated configuration information from a remote location.

3. The method of claims 1 or 2, wherein the wireless configuration information comprises a service set identifier, SSID, and channel number.

4. The method of any of claims 1 to 3, wherein the transmitted network parameters comprise a subnet mask and a domain name system, DNS, name.

5. The method of any of claims 1 to 4, wherein the wireless configuration information comprises at least one encryption key.

6. The method of any of claims 1 to 5, further comprising: controlling the range extender from the wireless access point.

7. The method of any of claims 1 to 6, wherein the range extender and the at least one wireless device are part of an authorized service domain.

8. The method of any of claims 1 to 7, further comprising:
transmitting a status of the range extender; and
based on the transmitted status, receiving updated firmware.

9. The method of any of claims 1 to 8, wherein the range extender communicates via a Multimedia over Coax Alliance, MoCA.

10. A range extender (406) comprising:
a processor (502, 504); and
a memory (602) storing computer readable instructions, wherein in response to the range extender (406) being connected via a wired communication path to a network controller comprised in a wireless access point (104), the computer readable instructions, when executed by the processor (502, 504), cause the range extender (406) to perform:
receiving, via the wired communication path from a network controller comprised in a wireless access point (104), wireless configuration information associated with the wireless access point;
configuring, based on the wireless configuration information associated with the wireless access point, at least one wireless property associated with the range extender (406);
detecting, based on the configured at least one wireless property, at least one wireless device to be connected via a wireless communication path to a wireless network;
transmitting network parameters to the detected at least one wireless device; and
receiving an indication that the detected at least one wireless device is connected via the wireless communication path to the wireless network.

11. The range extender (406) of claim 10, wherein the range extender (406) is configured to communicate via Multimedia over Coax Alliance, MoCA.

12. The range extender (406) of claims 10 or 11, wherein the wireless configuration information comprises a service set identifier, SSID, and a channel number.

13. The range extender (406) of any of claims 10 to 12, wherein the transmitted network parameters comprise a subnet mask and a domain name system, DNS, name.

14. The range extender (406) of any of claims 10 to 13, wherein the computer readable instructions, when executed by the processor, further cause the range extender (406) to perform:
transmitting a status of the range extender; and
based on the transmitted status, receiving updated firmware.

15. The range extender (406) of any of claims 10 to 14, wherein the wireless configuration information comprises at least one encryption key.

## Patentansprüche

1. Verfahren zur Erweiterung eines drahtlosen Netzwerks durch einen Reichweitenerweiterer, wobei das Verfahren durch den Reichweitenerweiterer ausgeführt wird und umfasst:
Empfang (704), über einen verdrahteten Kommunikationsweg von einer Netzwerkkarte, die in einem drahtlosen Zugangspunkt enthalten ist, von mit dem drahtlosen Zugangspunkt verknüpfter drahtloser Konfigurationsinformation als Antwort auf den Anschluss (702) des Reichweitenerweiterers über den verdrahteten Kommunikationsweg an die Netzwerkkarte,
Konfiguration anhand der mit dem drahtlosen Zugangspunkt verknüpften drahtlosen Konfigurationsinformation von mindestens einer mit dem Reichweitenerweiterer verknüpften drahtlosen Eigenschaft,
Erkennung (706) anhand der konfigurierten, mindestens einen drahtlosen Eigenschaft von mindestens einem drahtlosen Gerät zur Verbindung über einen drahtlosen Kommunikationsweg mit dem drahtlosen Netzwerk,
Übertragung (708) von Netzwerkparametern an das erkannte mindestens eine drahtlose Gerät, und
Empfang (710) eines Hinweises, dass das erkannte mindestens eine drahtlose Gerät über den drahtlosen Kommunikationsweg mit dem drahtlosen Netzwerk verbunden ist.

2. Verfahren nach Anspruch 1, das außerdem den automatischen Empfang von aktualisierter Konfigurationsinformation von einem entfernten Standort umfasst.

3. Verfahren nach Anspruch 1 oder 2, in welchem die drahtlose Konfigurationsinformation einen Service-Set-Identifier SSID und eine Programmnummer umfasst.

4. Verfahren nach einem der Ansprüche 1 bis 3, in welchem die übertragenen Netzwerkparameter eine Subnetzmaske und ein Domain-Name-System, DNS, Namen umfassen.

5. Verfahren nach einem der Ansprüche 1 bis 4, in welchem die drahtlose Konfigurationsinformation mindestens einen Kodierungsschlüssel umfasst.

6. Verfahren nach einem der Ansprüche 1 bis 5, das außerdem die Steuerung des Reichweitenerweiterers vom drahtlosen Zugangspunkt aus umfasst.

7. Verfahren nach einem der Ansprüche 1 bis 6, in welchem der Reichweitenerweiterer und das mindestens eine drahtlose Gerät Teil einer autorisierten Service-Domain sind.

8. Verfahren nach einem der Ansprüche 1 bis 7, das außerdem umfasst:
Übertragung eines Status des Reichweitenerweiterers, und
anhand des übertragenen Status Empfang von aktualisierter Firmware.

9. Verfahren nach einem der Ansprüche 1 bis 8, in welchem der Reichweitenerweiterer über eine Multimedia over Coax Alliance, MoCA, kommuniziert.

10. Ein Reichweitenerweiterer (406), der umfasst:
einen Prozessor (502, 504), und
einen Speicher (602), der computerlesbare Anweisungen speichert, wobei als Antwort auf den Anschluss des Reichweitenerweiterers (406) über einen verdrahteten Kommunikationsweg an eine Netzwerkkarte, die in einem drahtlosen Zugangspunkt (104) enthalten ist, die computerlesbaren Anweisungen bei Ausführung durch den Prozessor (502, 504) den Reichweitenerweiterer (406) dazu veranlassen, auszuführen:
Empfang, über den verdrahteten Kommunikationsweg von einer Netzwerkkarte, die in einem drahtlosen Zugangspunkt (104) enthalten ist, von mit dem drahtlosen Zugangspunkt verknüpfter drahtloser Konfigurationsinformation,
Konfiguration anhand der mit dem drahtlosen Zugangspunkt verknüpften drahtlosen Konfigurationsinformation von mindestens einer mit dem Reichweitenerweiterer (406) verknüpften drahtlosen Eigenschaft.
Erkennung anhand der konfigurierten, mindestens einen drahtlosen Eigenschaft von mindestens einem drahtlosen Gerät zur Verbindung über einen drahtlosen Kommunikationsweg mit einem drahtlosen Netzwerk,
Übertragung von Netzwerkparametern an das erkannte mindestens eine drahtlose Gerät, und
Empfang eines Hinweises, dass das erkannte mindestens eine drahtlose Gerät über den drahtlosen Kommunikationsweg mit dem drahtlosen Netzwerk verbunden ist.

11. Reichweitenerweiterer (406) nach Anspruch 10, wobei der Reichweitenerweiterer (406) so konfiguriert ist, um über Multimedia over Coax Alliance, MoCA, zu kommunizieren.

12. Reichweitenerweiterer (406) nach Anspruch 10 oder 11, wobei die drahtlose Konfigurationsinformation einen Service-Set-Identifier SSID und eine Programmnummer umfasst.

13. Reichweitenerweiterer (406) nach einem der Ansprüche 10 bis 12, wobei die übertragenen Netzwerkparameter eine Subnetzmaske und ein Domain-Name-System, DNS, Namen umfassen.

14. Reichweitenerweiterer (406) nach einem der Ansprüche 10 bis 13, wobei die computerlesbaren Anweisungen bei Ausführung durch den Prozessor den Reichweitenerweiterer (406) außerdem dazu veranlassen, auszuführen:
Übertragung eines Status des Reichweitenerweiterers, und
anhand des übertragenen Status Empfang von aktualisierter Firmware.

15. Reichweitenerweiterer (406) nach einem der Ansprüche 10 bis 14, wobei die drahtlose Konfigurationskommunikation mindestens einen Kodierungsschlüssel umfasst.

## Revendications

1. Procédé d'extension d'un réseau sans fil au moyen d'un dispositif d'extension de plage, le procédé étant réalisé par le dispositif d'extension de plage et comprenant les étapes consistant à :
recevoir (704), via un chemin de communication filaire depuis un contrôleur réseau compris dans un point d'accès sans fil, des informations de configuration sans fil associées au point d'accès sans fil en réponse à la connexion (702) du dispositif d'extension de plage au contrôleur réseau via le chemin de communication filaire ;
configurer, sur la base des informations de configuration sans fil associées au point d'accès sans fil, au moins une propriété sans fil associée au dispositif d'extension de plage ;
détecter (706), sur la base de la au moins une propriété sans fil configurée, au moins un dispositif sans fil devant être connecté au réseau sans fil via un chemin de communication sans fil ;
transmettre (708) des paramètres réseau au dispositif sans fil détecté au nombre au moins de un ; et
recevoir (710) une indication de ce que le au moins un dispositif sans fil détecté est connecté au réseau sans fil via le chemin de communication sans fil.

2. Procédé selon la revendication 1, comprenant en outre la réception automatique d'informations de configuration actualisées depuis un site distant.

3. Procédé selon les revendications 1 ou 2, dans lequel les informations de configuration sans fil comprennent un identifiant d'ensemble de service, SSID, et un numéro de canal.

4. Procédé selon l'une quelconque des revendications 1 à 3, dans lequel les paramètres de réseau transmis comprennent un masque de sous-réseau et un système de nom de domaine, DNS.

5. Procédé selon l'une quelconque des revendications 1 à 4, dans lequel les informations de configuration sans fil comprennent au moins une clé de cryptage.

6. Procédé selon l'une quelconque des revendications 1 à 5, comprenant en outre : le contrôle du dispositif d'extension de plage depuis le point d'accès sans fil.

7. Procédé selon l'une quelconque des revendications 1 à 6, dans lequel le dispositif d'extension de plage et le au moins un dispositif sans fil font partie d'un domaine de service autorisé.

8. Procédé selon l'une quelconque des revendications 1 à 7, comprenant en outre :
la transmission d'un statut du dispositif d'extension de plage ; et
sur la base du statut transmis, la réception du firmware actualisé.

9. Procédé selon l'une quelconque des revendications 1 à 8, dans lequel le dispositif d'extension de plage communique via "Multimedia over Coax Alliance", MoCA.

10. Dispositif d'extension de plage (406), comprenant :
un processeur (502, 504) ; et
une mémoire (602) stockant des instructions lisibles par un ordinateur, dans lequel en réponse au dispositif d'extension de plage (406) connecté via un chemin de communication sans fil à un contrôleur réseau compris dans un point d'accès sans fil (104), les instructions lisibles par ordinateur, lorsqu'elles sont exécutées par le processeur (502, 504), font que le dispositif d'extension de plage (406) exécute les opérations suivantes :
recevoir, via le chemin de communication sans fil d'un contrôleur réseau compris dans un point d'accès sans fil (104), des informations de configuration sans fil associées au point d'accès sans fil ;
configurer, sur la base des informations de configuration sans fil associées au point d'accès sans fil, au moins une propriété sans fil associée au dispositif d'extension de plage (406) ;
détecter, sur la base de la au moins une propriété sans fil configurée, au moins un dispositif sans fil qui sera connecté via un chemin de communication sans fil à un réseau sans fil ;
transmettre des paramètres réseau vers le au moins un dispositif sans fil détecté ; et
recevoir une indication que le au moins un dispositif sans fil détecté est connecté via le chemin de communication sans fil au réseau sans fil.

11. Dispositif d'extension de plage (406) selon la revendication 10, dans lequel le dispositif d'extension de plage (406) est configuré pour communiquer via Multimedia over Coax Alliance, MoCA.

12. Dispositif d'extension de plage (406) selon les revendications 10 ou 11, dans lequel les informations de configuration sans fil comprennent un identifiant d'ensemble de service, SSID, et un numéro de canal.

13. Dispositif d'extension de plage (406) selon l'une quelconque des revendications 10 à 12, dans lequel les paramètres du réseau transmis comprennent un masque de sous-réseau et le nom d'un système de nom de domaine, DNS.

14. Dispositif d'extension de plage (406) selon l'une quelconque des revendications 10 à 13, dans lequel les instructions lisibles par ordinateur, lorsqu'elles sont exécutées par le processeur, font en outre que le dispositif d'extension de plage (D406) exécute les opérations suivantes :
Transmettre un statut du dispositif d'extension de plage ; et
Sur la base du statut transmis, recevoir le firmware actualisé.

15. Dispositif d'extension de plage (406) selon l'une quelconque des revendications 10 à 14, dans lequel les informations de configuration sans fil comprennent au moins une clé de cryptage.
